Europäisches Patentamt

European Patent Office

Office européen des brevets

(11) Numéro de publication: **0 308 674**
**A1**

## (12) DEMANDE DE BREVET EUROPEEN

(21) Numéro de dépôt: 88113855.6

(22) Date de dépôt: 25.08.88

(51) Int. Cl.⁴: **A47C 7/24** , **A47C 4/02** ,
**B61B 12/00**

(30) Priorité: 27.08.87 FR 8712262

(43) Date de publication de la demande:
**29.03.89 Bulletin 89/13**

(84) Etats contractants désignés:
**AT BE CH DE ES FR GB IT LI NL**

(71) Demandeur: **S.A.R.L. ANAIS**
**Zone Artisanale du Gouttier**
**F-73470 Novalaise(FR)**

(72) Inventeur: **Caubet,Jean Claude**
**JOUDRAIN**
**F-74150 Marcellaz Albanais(FR)**
Inventeur: **Mino Matot,Jean-Jacques**
**BACHELIN**
**F-73240 Saint Genis Guiers(FR)**

(74) Mandataire: **Hagry, François**
**52, avenue de la Gare**
**F-74100 Annemasse(FR)**

(54) **Garniture, notamment assise et dossier pour sièges individuels et collectifs.**

(57) La garniture , destinée à être fixée sur une structure porteuse (2) est constituée, pour former une assise ou un dossier, d'une succession de modules (5, 51) de forme allongée juxtaposés jointivement d'avant en arrière ou en hauteur. Chaque module (5, 51) est constitué d'une âme en bois (6) noyée par surmoulage dans une mousse (7) de matériau plastique, avantageusement de polyuréthane. Les modules (5) identiques entre eux, sauf un module frontal (51), sont venus à partir d'un seul moule transformable selon le nombre de places souhaité. Les modules (5, 51) sont fixés sur la structure (2) au moyen de demi-colliers (8) vissés dans l'âme (6). Ils présentent latéralement des échancrures (10) définissant des lumières dans la garniture.

L'invention s'applique particulièrement à la réalisation de sièges individuels ou collectifs pour télésièges.

Fig 4

## GARNITURE, NOTAMMENT ASSISE ET DOSSIER POUR SIEGES INDIVIDUELS ET COLLECTIFS.

La présente invention est relative aux sièges individuels ou collectifs.par juxtaposition solidaire ou non, notamment à ceux qui, à l'utilisation, sont soumis à des conditions de contraintes mécaniques ou d'environnement météorologique sévères, et concerne plus particulièrement une garniture, à savoir assise et ou dossier, pour de tels sièges.

Bien que l'invention ne soit pas limitée à ce domaine d'utilisation précis, elle sera plus particulièrement exposée en relation avec une mise en oeuvre dans le domaine des sièges suspendus employés dans des installations de télésièges où les conditions mécaniques et surtout météorologiques ou climatiques s'avèrent extrêmement rigoureuses. En effet, dans ce domaine, les sièges sont soumis à des contraintes mécaniques dynamiques sortant de l'ordinaire, du fait de leur mobilité et de la fréquence des chocs éventuellement dûs au manque d'accoutumance des utilisateurs. De même, surtout en moyenne et haute montagne, les variations extrêmes de température, les intempéries, notamment le vent, la pluie, la neige et la formation de glace, le rayonnement lumineux en particulier dans l'ultra-violet, provoquent très vite un vieillissement excessif des garnitures d'où des détériorations qui affectent considérablement le confort, et par là, la sécurité des utilisateurs déjà placés dans des conditions inhabituelles qui les rendent encore plus vulnérables. L'entretien en état acceptable et fiable pose de gros problèmes et est très onéreux et la durée de vie du matériel s'avère par trop courte.

Ces problèmes ne sont pas nouveaux, et préoccupent les constructeurs et les exploitants d'installations.

Parmi les plus anciennes solutions proposées et encore existantes, on trouve une assise - et éventuellement un dossier - constituée de lattes de bois nues sinon vernies, et fixées par boulons ou vis transversalement par rapport au sens de déplacement du siège, sur une structure tubulaire portée par la suspente du télésiège. Cet équipement, relativement léger, n'apporte qu'un confort quasi nul, les ruptures des lattes sont assez fréquentes, la présence d'échardes dues à l'éclatement du bois soumis aux intempéries n'est pas rare, d'où des déchirures de vêtements ou même des blessures. Rien n'est prévu pour l'amortissement des chocs sur l'avant, et en outre, l'entretien en est particulièrement onéreux et ces sièges manquent tout-à-fait d'esthétique.

Le progrès représenté par la substitution aux lattes de bois de lattes en matériau plastique, fixées de la même manière, hormis l'esthétique et un entretien plus facile, n'est pas significatif du fait des déformations importantes et de la casse qui en est la conséquence. Hormis un confort quasi nul en marche, le problème de l'amortissement aux chocs avant n'est pas résolu.

Une solution hybride consistant à revêtir les lattes de bois d'une enveloppe en matériau plastique, bien que combinant les avantages de la nervosité mécanique du bois à un entretien plus facile du matériau plastique, laisse également en suspens les exigences de confort et d'amortissement des chocs, et le revêtement a une nette tendance à se désolidariser dubois et à se fissurer.

Plus récemment, a été proposée une banquette en matériau plastique sous forme de coque monobloc ajourée et fixée par vis, boulons ou rivets sur la structure tubulaire. Par rapport aux solutions antérieures, celle-ci présente l'avantage de la rigidité, de l'esthétique et surtout d'une sécurité psychologique du passager du fait d'une protection au moins apparente due à l'absence du vide continu d'un bord à l'autre que l'on retrouve dans les dispositifs à lattes. Cependant, le problème du confort, autre que psychologique, et de l'amortissement des chocs à l'avant par la banquette elle-même n'est pas résolu.

Dans le sens du confort, un pas semble avoir été franchi par une coque en deux éléments distincts, assise et dossier, fixés par vis ou boulons sur la structure, et sur laquelle est rapporté un revêtement de rembourrage en mousse de polyéthylène non ajouré.Le dispositif offre une assez bonne rigidité, est relativement esthétique et sécurisant pour le passager, mais en l'absence d'ajours, se prête à la rétention de neige qui ne peut être facilement évacuée, et à la formation de glace. A cela, s'ajoute le manque de résistance de la mouse de polyéthylène à la compression et au déchirement et un très mauvais vieillissement. Le confort, autre que psychologique y est absent et le problème des chocs avant est là aussi oublié.

PLus récemment, essentiellement dans la recherche de l'esthétique et du confort, au moins apparent, ont été proposées des solutions nécessitant la transformation de la structure même de support du télésiège. La structure tubulaire classique existante et quasi universelle doit être remplacée par un plateau d'assise de fond fixé à la suspente, plateau constitué par une tôle zinguée ou en aluminium.

Ainsi, dans un premier exemple de réalisation, une plaque de mousse de polyuréthane est rapportée et rivetée ou pincée sur la tôle de rapport et elle est habillée par un revêtement en chlorure de polyvinyle. S'adaptant facilement à des dimensions diverses, cette solution a tendance à se substituer avantageusement aux lattes de bois ou de matériau plastique mais elle nécessite, comme déjà dit, le démontage des structures tubulaires existantes et ne permet pas la réalisation de sièges individualisés. Elle permet une meilleure esthétique et un confort au moins apparemment amélioré. Cependant, elle ne présente aucune efficacité aux chocs à l'avant, son étanchéité à l'eau laisse grandement à désirer, d'où des accumulations d'eau dans la mousse et les dégâts dûs au gel pouvant survenir rapidement, d'où une durée de vie extrêmement limitée.

Dans un second exemple de réalisation, on utilise sensiblement les mêmes techniques, mais en réalisant cette fois des sièges complètement individualisés, ce qui toutefois nécessite que l'habillage en chlorure de polyvinyle soit cousu. Bien que présentant un meilleur confort et hormis le coût nettement plus élevé que dans le cas précédent, on retrouve les mêmes inconvénients aggravés par la couture qui nuit davantage à l'étanchéité, présente de graves risques de déchirures et favorise la formation rapide de bourrelets indésirables sur le bord avant.

Enfin, a été proposée une conception de sièges également complètement individualisés et même séparés par des vides relativement importants. La structure tubulaire classique doit être éliminée, d'où une adaptation difficile sur des télésièges existants. Des fers plats coudés disposés parallèlement à la direction de déplacement forment une ossature à la fois pour l'assise et pour le dossier. Sur ces fers, est moulée une mousse de polyuréthane à peau intégrale qui peut présenter des ajours pour l'évacuation de la neige. La fixation sur la structure de support se fait par boulonnage des fers plats. Cette réalisation assez robuste et simple permet une esthétique intéressante. Par contre, son poids est très élevé et son coût plutôt élevé. Le confort en est médiocre du fait de l'importance des fers noyés dans la mousse et la présence même de ces fers rend inefficace pour l'absorption des chocs la présence d'une forme en bourrelet à l'avant.

La présente invention vise à surmonter les inconvénients des diverses solutions qui viennent d'être évoquées. Ses caractéristiques apparaitront à la lumière de la description qui suit et pour l'intelligence de laquelle on se reportera aux dessins, dont :

- la figure 1 représente en perspective un ensemble de sièges pour trois passagers auquel est appliquée l'invention, pour un télésiège dont la structure porteuse et la suspente n'apparaissent esquissées que pour la compréhension,

- la figure 2 montre en perspective divers éléments de garniture pour une assise et/ou un dossier tels que ceux de la figure 1, respectivement pour quatre, trois et deux passagers par suspente,

- la figure 3 représente en perspective pour un ensemble de sièges à trois places, un élément frontal pour l'assise,

- la figure 4 est une représentation avec coupes partielles d'un élément latéral de l'ensemble de la figure 4 mettant en évidence sa constitution interne et son mode de fixation sur la structure tubulaire du télésiège,

- la figure 5 étant en coupe perpendiculaire à la direction de déplacement du télésiège, une vue de détail montrant mieux la fixation,

- la figure 6 illustre par une coupe partielle dans le même plan le comportement en charge d'un des éléments précédents,

- la figure 7 montre la constitution d'un moule utilisable pour la réalisation d'éléments pour un télésiège à une, deux, trois ou quatre places.

Comme déjà évoqué plus haut, la présente invention vise à allier le confort, l'esthétique, la sécurité de la fixation, le caractère pratique de l'utilisation, une maintenance nulle ou aussi légère que possible et une fiabilité sur une très longue durée, et ce, sans qu'il soit nécessaire ou utile de modifier les structures porteuses des télésièges existants.

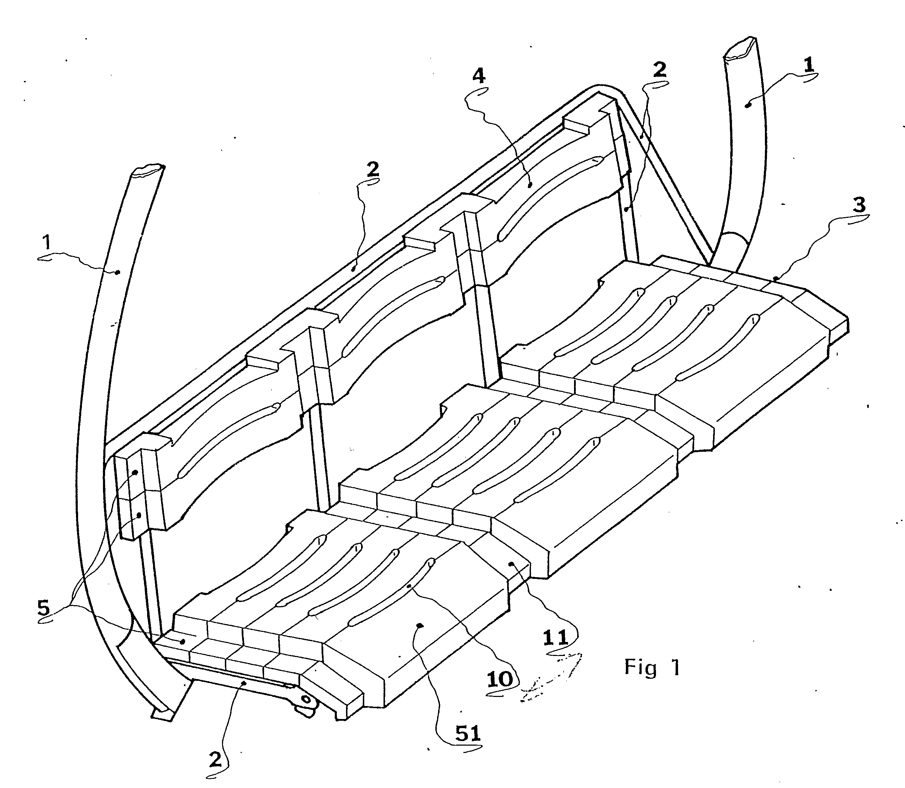

A la figure 1, on voit dans leur partie inférieure les éléments classiques 1 de la suspente d'un télésiège pour trois passagers et desquels est solidaire une structure tubulaire 2 également classique. Sur cette structure 2, est assujettie une garniture selon l'invention pour constituer les assises 3 et dossiers 4 de trois sièges individualisés, mais cependant solidaires entre eux.

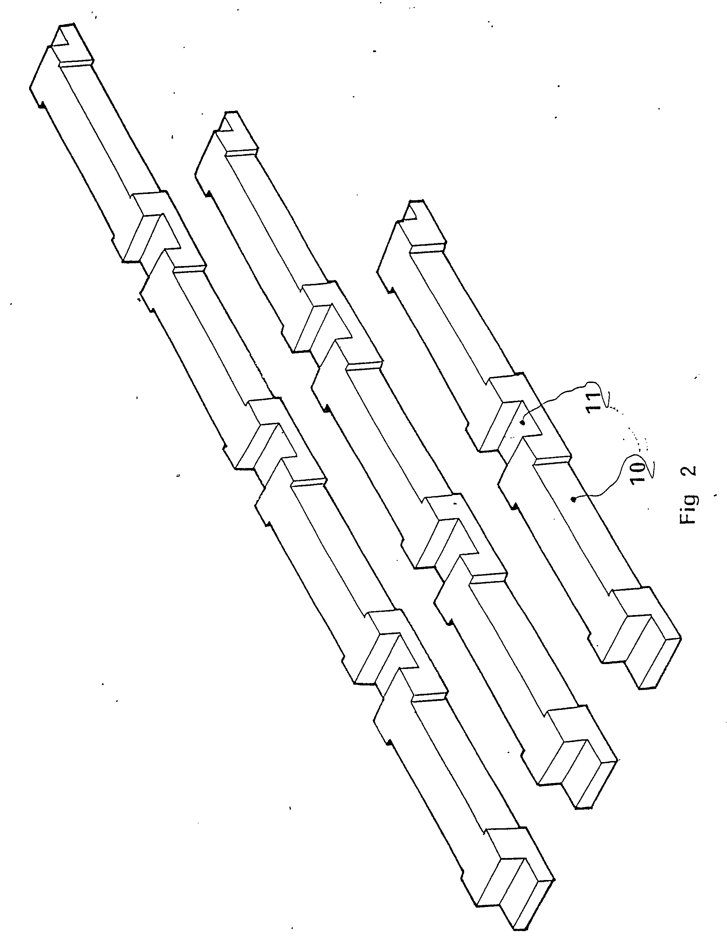

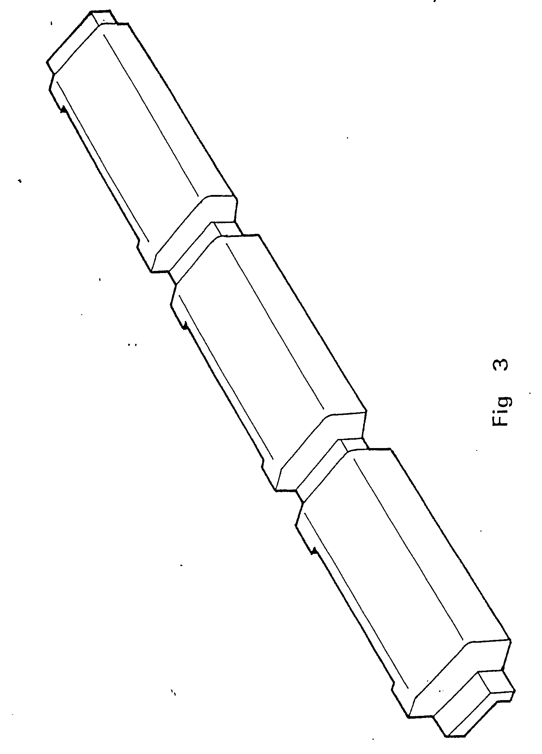

La garniture est constituée de modules 5 de forme allongée, qui sont avantageusement identiques entre eux, tant pour les assises 3 que pour les dossiers 4, à l'exception, pour les assises 3, d'un module frontal 51 qui affecte une forme plus massive débordante et enveloppante vers l'avant des sièges, pour jouer un rôle de confort et protection des mollets des passagers et d'amortissement des chocs avant. Des formes extérieures d'exécution de ces modules 5 et 51 sont représentées respectivement aux figures 2 et 3, la figure 2 montrant des modules 5 adaptés à des télésièges pour deux, trois et quatre passagers, et la figure 3 un module frontal 51 pour un télésiège à trois passagers.

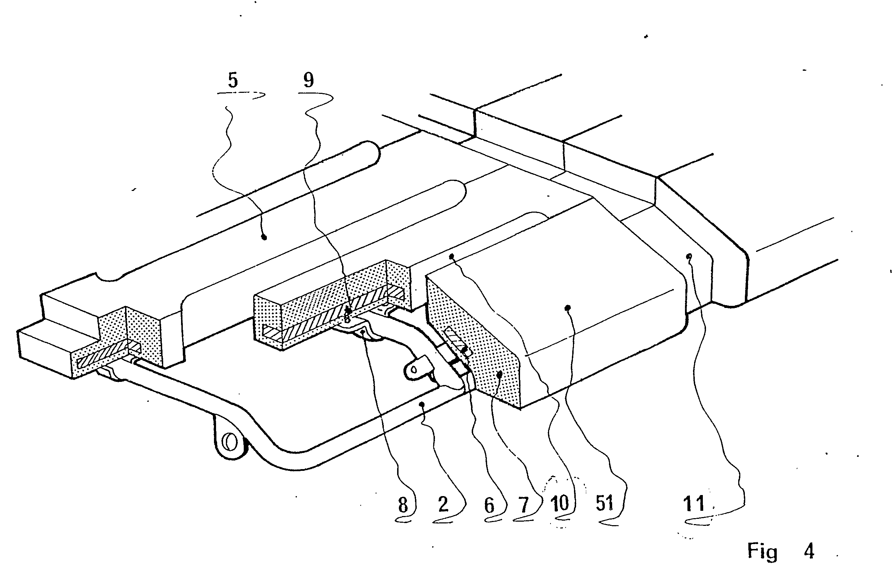

Comme l'illustrent les figures 1 et 4, les modules 5 sont juxtaposés, de préférence jointivement, en succession dans le sens de la profondeur, c'est-à-dire d'avant en arrière en partant d'un module frontal 51 pour les assises 3,et dans le sens de la hauteur pour les dossiers 4.

Chaque module 5, 51 est constitué par une âme en bois 6 (fig.4) en forme de latte, noyée,de préférence entièrement, par surmoulage dans un rembourrage 7 de mousse en matériau plastique, avantageusement en polyuréthane.

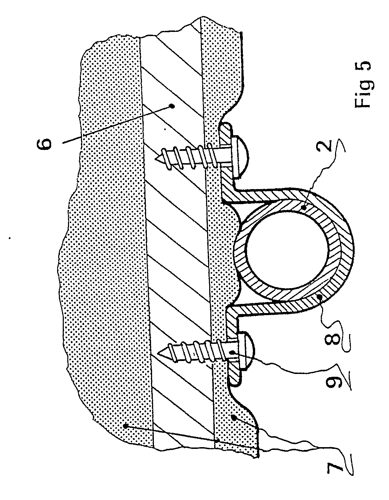

Les modules 5, 51 sont fixés sur la structure tubulaire 2 au moyen de demi-colliers 8 usuels,comme représenté aux figures 4 et 5. Ces demi-colliers enveloppant les tubes 2 sont assujettis à l'âme 6 au moyen de vis à bois 9. Comme on le voit, les vis 9 traversent le rembourrage 7 avant d'atteindre l'âme 6. Celui-ci joue donc un rôle d'amortissement important en s'opposant à la transmission des chocs et vibrations entre la structure 2 et l'âme 6. Si la structure 2 n'est pas constituée de tubes, mais d'éléments d'autre section, il suffira d'adapter la forme des demi-colliers à cette situation ou d'utiliser des crochets adéquats.

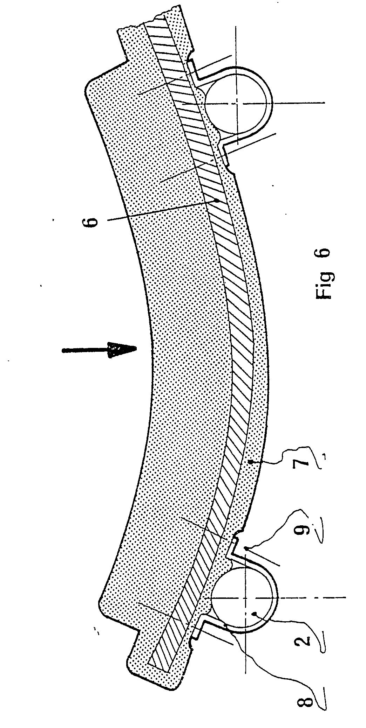

Dans le cas, de loin le plus fréquent, de structure tubulaire 2, les demi-colliers permettent la fixation sans modification de cette structure. Par ailleurs, par leur faculté de rotation autour des tubes 2, ils permettent d'absorber l'effort que recevraient les vis 9 lors de la flexion des modules 5, 51 sous charge, comme l'illustre la figure 6.

Les âmes en bois 6 sont avantageusement constituées de contre-plaqué spécifique comprénant plusieurs couches fil sur fil, du fait de son excellente stabilité dimensionnelle, de sa tenue aux agents extérieurs même en mileu très humide, de son homogénéité en qualité et de sa facilité d'approvisionnement. Celui-ci assure en outre une bonne résistance à la rupture en charge, un bon module d'élasticité et une bonne résistance à l'arrachement des vis. On peut également utiliser des lattes en essences naturelles, telles par exemple, que le mélèze, le robinier et le hêtre, mais l'homogénéité de qualité et l'approvisionnement, avec un coût plus élevé, seraient plus problématiques.

Pour le rembourrage 7, on choisit de préférence une mousse de polyuréthane pour son excellente étanchéité et sa bonne résistance mécanique et aux agents extérieurs notamment au rayonnement ultra-violet. La mousse surmoulée peut être venue directement avec peau intégrale, ou être recouverte d'un habillage également venu de surmoulage en film de polyuréthane qui allie à une excellente extensibilité une très bonne résistance en place à la pénétration. Il est également possible de procéder par enduction de polyuréthane sur un tissu tel que celui disponible sous la dénomination de "Lycra" d' excellente extensibilité et qui permet le choix de nombreux coloris stables sous rayonnement ultra-violet.

Les demi-colliers 8 et vis à bois aggloméré 9 disponibles dans le commerce sont traités par galvanisation à chaud pour assurer leur tenue aux agents extérieurs.

Comme on le voit aux figures, les modules 5, 51,-en faisant abstraction des extrémités et de ponts 11 entre assises 3 et dossiers 4 individualisés- de forme au moins approximativement parallélépipédique (prismatique pour le module frontal 51), présentent avantageusement au droit de la place prévue pour chaque passager des échancrures latérales 10 sur toute leur épaisseur et dans le sens de leur longueur,(le module frontal 51 n'en présentant qu'une seule). Ces échancrures 10, une fois les modules 5, 51 juxtaposés jointivement, définissent des lumières permettant l'évacuation quasi-naturelle de toute trace de neige ou autres éléments indésirables.

Les modules 5, 51, comme l'illustrent les figures 1 à 4, peuvent être venus d'une pièce pour constituer les assises 3 et dossiers 4 pour un ou plusieurs passagers. Entre les places successives, les modules 5, 51 présentent des ponts 11 de moindre épaisseur, ce qui permet d'individualiser chaque place sans pour autant qu'il y ait présence d'un vide peu sécurisant pour les passagers. Sans que cela soit nécessaire, on retrouve en extrémité des modules 5, 51 cette même forme de moindre épaisseur pour des questions d'esthétique et de pratique de moulage.

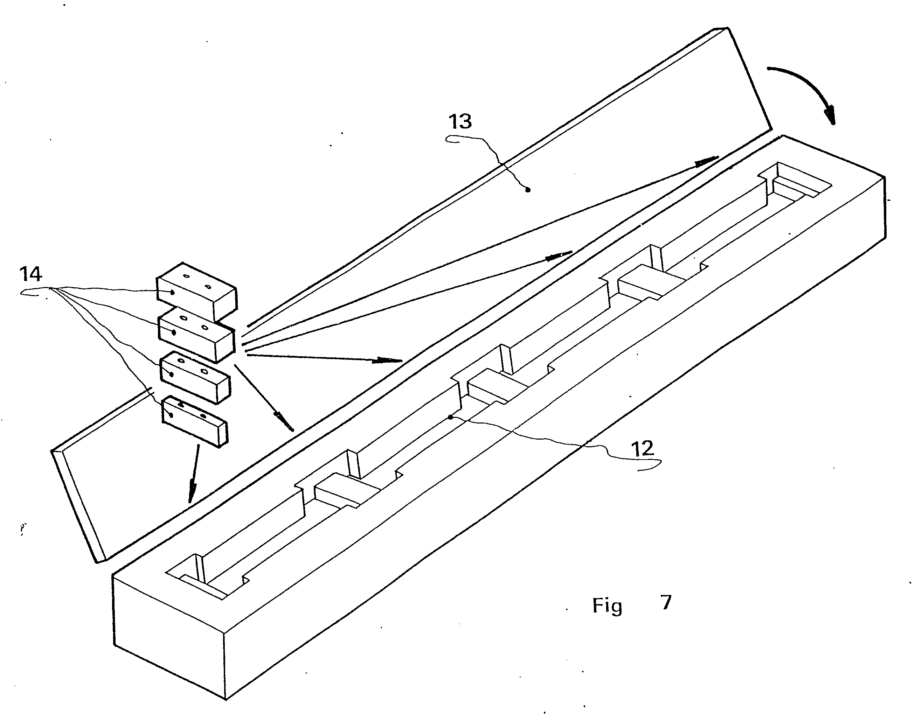

Etant identiques, tous les modules 5 pourront venir du même moule (le module 51 nécessitant, lui, un moule spécial) et ce, quel que soit le nombre de passagers auquel ils sont destinés. La figure 7 illustre un tel moule, prévu pour la réalisation des modules 5 à une, deux, trois ou quatre places. La mise à longueur aux extrémités du module prévu et l'isolation d'une partie du moule pour déterminer le nombre de places souhaitées se fait par adjonction dans l'empreinte 12 avant fermeture du couvercle 13, de noyaux 14 en forme de blocs parallélépipédiques de dimensions appropriées au cas considéré. Avec des formes un peu plus complexes, la même technique d'applique aux modules frontaux 51.

En pratique, deux tailles de modules et de moules seront prévues pour couvrir la quasi-totalité des types de télésièges existants, à savoir pour des largeurs de siège de 450 et 440 mm et des intervalles entre sièges de 50 mm et 40 mm respectivement.

De ce qui précède, on voit que l'utilisation d'âmes 6 en bois souples et nerveuses assure la rigidité requise des modules 5, 51 entre les portées des structures 2 existantes et permet la fixation par demi-colliers 8 de ces modules 5, 51 en tout point de leur longueur, quels que soient les entraxes entre les tubes 2 des structures porteuses. L'utilisation de mousse plastique étanche à l'eau surmoulée assure la solidarisation des âmes 6 et du rembourrage 7 et le confort des passagers qui peut être optimalisé par le choix de plusieurs densités. Par ailleurs, elle permet de grandes possibilités d'esthétique par la faculté de la mousse d'épouser des formes très complexes de moules, et elle garantit en outre une bonne tenue mécanique et au vieillissement sous les agents extérieurs : compression sous charge, abrasion, dégradation accidentelle ou par vandalisme, pénétration de bâtons de skis ou clés, température, humidité, rayonnement.

On peut également remarquer que le montage des modules ne nécessite qu'un outillage extrêmement léger (marteau, burin, visseuse), ce que facilite considérablement la mise en oeuvre sur le terrain, et que l'invention permet un allègement considérable par rapport aux techniques usuelles.

Ce qui vient d'être exposé en référence à des télésièges s'applique bien évidemment à toute autre mise en oeuvre pour la réalisation de garnitures de sièges individuels ou collectifs, notamment des sièges fixes, exposés aux intempéries: jardins et parcs, bateaux, véhicules découverts, etc ...

**Revendications**

1.- Garniture, notamment assise (3) et/ou dossier (4), pour sièges individuels ou collectifs, destinée à être fixée sur une structure porteuse (2), caractérisée par le fait qu'elle est constituée par une succession de modules (5, 51) de forme générale allongée, juxtaposés dans le sens de la profondeur, c'est-à-dire d'avant en arrière pour l'assise (3), et dans le sens de la hauteur pour le dossier (4), chaque module (5, 51) étant constitué par une âme en bois (6) noyée dans un rembourrage (7) en mousse de matériau plastique venu par surmoulage.

2.- Garniture selon la revendication 1, caractérisée par le fait que les modules (5) sont identiques entre eux, à l'exception d'un module frontal (51) pour une assise (3).

3.- Garniture selon la revendication 1 ou la revendication 2, caractérisée par le fait que les modules (5, 51) dont disposés jointivement sur la structure porteuse (2) pour former la garniture.

4.- Garniture selon l'une quelconque des revendication 1 à 3, caractérisée par le fait que les modules (5) sont de forme générale parallélépipédique et présentent sur leurs bords latéraux et sur la totalité de leur épaisseur une échancrure (10) au droit de la place prévue pour un utilisateur assis.

5.- Garniture selon l'une quelconque des revendications 1 à 4, caractérisée par le fait que les modules (5, 51) sont conçus pour définir plusieurs places assises.

6.- Garniture selon la revendication 5, caractérisée par le fait que des ponts (11) de moindre épaisseur séparent les places les unes des autres.

7.- Garniture selon l'une quelconque des revendications 1 à 6, caractérisée par le fait que les modules (5, 51) sont fixés sur la structure (2) au moyen de demi-colliers (8) enveloppant des éléments de structure (2) et vissés sur leur âme (6).

8.- Garniture selon l'une quelconque des revendications là 7, caractérisée par le fait que l'âme (6) est constituée de contre-plaqué.

9.- Garniture selon l'une quelconque des revendications 1 à 8, caractérisée par le fait que la mousse plastique de rembourrage (7) est en polyuréthane.

10.- Garniture selon la revendication 9, caractérisée par le fait que la mousse de polyuréthane est venue avec peau intégrale.

11.- Garniture selon la revendication 9, caractérisée par le fait que la mousse de polyuréthane est recouverte d'un film de polyuréthane venu également par surmoulage.

12.- Garniture selon la revendication 9, caractérisée par le fait que la mousse de polyuréthane est revêtue d'une peau obtenue par enduction d'un tissu par du polyuréthane.

Fig 1

Fig 2

EP 0 308 674 A1

Fig 3

Fig 4

Fig 5

EP 0 308 674 A1

Fig 6

EP 0 308 674 A1

Fig 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 663 055 (GALE)<br>* Colonne 1, ligne 65 - colonne 2, ligne 3; colonne 2, lignes 38-43; colonne 3, lignes 10-15; figures 1,3-5 * | 1,8,9 | A 47 C 7/24<br>A 47 C 4/02<br>B 61 B 12/00 |
| A | | 2 | |
| | ---- | | |
| Y | FR-A-1 496 282 (ZSCHOCKE)<br>* Page 2, colonne gauche, ligne 56 - colonne droite, ligne 45; figures 1,2 * | 1,8,9 | |
| | ---- | | |
| A | FR-A-1 380 470 (SIMCA AUTOMOBILES)<br>* Page 2, colonne gauche, lignes 34-43; figures 7,8 * | 1,3 | |
| | ---- | | |
| A | FR-A-2 278 549 (POMAGALSKI S.A)<br>* Figure 1 * | 1,5 | |
| | ---- | | |
| A | DE-A-2 654 240 (PHILIPPEN)<br>* Page 5, ligne 17 - page 6, ligne 6; page 6, lignes 17-20; figures 1-4 * | 1,4,5 | |
| | ---- | | DOMAINES TECHNIQUES RECHERCHES (Int. Cl.4) |
| A | FR-A-2 084 502 (UNIVERSAL OIL PRODUCTS CO.)<br>* Page 3, ligne 25 - page 4, ligne 17; figure 5 * | 1,9-11 | A 47 C<br>B 61 B |
| | ---- | | |
| A | US-A-3 379 472 (HILFKER)<br>* Colonne 2, lignes 36-50; figures 1,6 * | 1 | |
| | ---- | | |
| A | US-A-3 861 747 (DIAMOND)<br>* Colonne 5, ligne 39 - colonne 6, ligne 7; colonne 6, ligne 63 - colonne 7, ligne 12; colonne 8, lignes 28-45; figures 1,2,5 * | 1-4,7,9 ,10 | |
| | ----- | | |

Le présent rapport a été établi pour toutes les revendications

| Lieu de la recherche | Date d'achèvement de la recherche | Examinateur |
|---|---|---|
| LA HAYE | 18-11-1988 | BELTZUNG F.C. |